# EUROPEAN PATENT APPLICATION

(11) **EP 4 852 402 A1**
(43) Date of publication of application: **09.12.2026**
(21) Application number: 25855871.7
(22) Date of filing: 14.07.2025
(51) Int. Cl.: H04L 51/046

(54) **NETWORK COMMUNICATION METHOD AND APPARATUS, DEVICE, COMPUTER-READABLE STORAGE MEDIUM, AND COMPUTER PROGRAM PRODUCT**

(30) Priority: 21.08.2024 CN 202411156338
(71) Applicant: Tencent Technology (Shenzhen) Company Limited, Shenzhen, Guangdong 518057 (CN)
(72) Inventor: PENG, Jiangao, Shenzhen, Guangdong 518057 (CN); LIANG, Zhaopeng, Shenzhen, Guangdong 518057 (CN); LIU, Zhichao, Shenzhen, Guangdong 518057 (CN); LIN, Kaifan, Shenzhen, Guangdong 518057 (CN); HUANG, Yuhui, Shenzhen, Guangdong 518057 (CN); LIN, Zheng, Shenzhen, Guangdong 518057 (CN); LI, Weiran, Shenzhen, Guangdong 518057 (CN); WANG, Baojian, Shenzhen, Guangdong 518057 (CN); ZHAO, Jingchen, Shenzhen, Guangdong 518057 (CN)
(74) Representative: Gunzelmann, Rainer
(86) International application number: PCT/CN2025/108404
(87) International publication number: WO 2026/040701

(57) **Abstract**

The present application provides a network communication method and apparatus, a device, a storage medium, and a program product. The method is applied to an Internet of things server, and comprises: receiving a first communication request of an Internet of things device, wherein the first communication request comprises an object identifier; sending to a communication server a second communication request comprising an object identifier, wherein the second communication request is used for triggering access of a pre-authorized mini program in an instant messaging client to a virtual communication space, and the instant messaging client is associated with the object identifier; and requesting the communication server to enable the Internet of things device to access the virtual communication space, wherein the virtual communication space is used by the communication server to exchange network communication data between the Internet of things device and the mini program.

## Description

### RELATED APPLICATION

This application is based upon and claims priority to Chinese Patent Application No. 2024111563386, filed on August 21, 2024, which is incorporated herein by reference in its entirety.

### FIELD OF THE TECHNOLOGY

This application relates to network communication technologies, and in particular, to a network communication method and apparatus, a device, a computer-readable storage medium, and a computer program product.

### BACKGROUND OF THE DISCLOSURE

In network communication solutions in the related art, manufacturers of Internet of Things devices (for example, smart door locks and smart cameras) embed a software development kit for network communication into the Internet of Things devices and develop corresponding applications for terminal devices having different operating systems. Users need to install dedicated applications on the terminal devices to perform network communication with the Internet of Things devices, resulting in high development costs. In addition, a solution in the related art, in which a third-party company or its product providing network communication services installs corresponding client software or applications on the Internet of Things devices to implement network communication, imposes high requirements on hardware performance of the Internet of Things devices, making it difficult to satisfy low power consumption requirements of the Internet of Things devices.

### SUMMARY

Embodiments of this application provide a network communication method and apparatus, a device, a computer-readable storage medium, and a computer program product, to achieve compatibility and low power consumption of network communication for an Internet of Things device.

Technical solutions in the embodiments of this application are implemented as follows.

An embodiment of this application provides a network communication method, applied to an Internet of Things server. The method includes:
receiving a first communication request of an Internet of Things device, the first communication request including an object identifier;
transmitting a second communication request including the object identifier to a communication server, the second communication request being configured for triggering a pre-authorized mini program in an instant messaging client to access a virtual communication space, and the instant messaging client being associated with the object identifier; and
requesting the communication server to connect the Internet of Things device to the virtual communication space, the virtual communication space being configured for the communication server to exchange network communication data between the Internet of Things device and the mini program.

An embodiment of this application provides a network communication method, applied to a communication server. The method includes:
receiving a second communication request that is transmitted by an Internet of Things server and that includes an object identifier, the second communication request being transmitted after the Internet of Things server receives a first communication request transmitted by an Internet of Things device, and the first communication request including the object identifier;
connecting the Internet of Things device to a virtual communication space;
connecting a pre-authorized mini program in an instant messaging client to the virtual communication space, the instant messaging client being associated with the object identifier; and
exchanging network communication data between the Internet of Things device and the mini program through the virtual communication space.

An embodiment of this application provides a network communication method, applied to an instant messaging client. The method includes:
displaying prompt information in a pre-authorized mini program of the instant messaging client; and
invoking the pre-authorized mini program to access a virtual communication space in response to a trigger operation for the prompt information.

An embodiment of this application provides a network communication apparatus, applied to an Internet of Things server. The apparatus includes:
a data receiving module, configured to receive a first communication request of an Internet of Things device, the first communication request including an object identifier;
a data transmission module, configured to transmit a second communication request including the object identifier to a communication server, the second communication request being configured for triggering a pre-authorized mini program in an instant messaging client to access a virtual communication space, and the instant messaging client being associated with the object identifier; and
a network communication module, configured to request the communication server to connect the Internet of Things device to the virtual communication space, the virtual communication space being configured for the communication server to exchange network communication data between the Internet of Things device and the mini program.

In the foregoing solution, the network communication module is further configured to: receive a second communication parameter transmitted by the communication server, the second communication parameter including a virtual communication space identifier; and transmit an access request to the communication server, the access request including a network address of the Internet of Things server, and the access request being configured for triggering the communication server to bind a network address of the Internet of Things device to the virtual communication space identifier.

In the foregoing solution, the network communication module is further configured to: receive network communication data collected by the Internet of Things device, query a network address of the mini program bound to the virtual communication space identifier, and transmit, based on the network address of the mini program through a software development kit, the network communication data collected by the Internet of Things device to the mini program; and receive, through the software development kit, the network communication data collected by the mini program, query a network address of the Internet of Things device bound to the virtual communication space identifier, and transmit, based on the network address of the Internet of Things device, the network communication data collected by the mini program to the Internet of Things device.

An embodiment of this application provides a network communication apparatus, applied to a communication server. The apparatus includes:
a data processing module, configured to receive a second communication request that is transmitted by an Internet of Things server and that includes an object identifier, the second communication request being transmitted after the Internet of Things server receives a first communication request transmitted by an Internet of Things device, and the first communication request including the object identifier; and
a network communication module, configured to connect the Internet of Things device to a virtual communication space,
the network communication module being further configured to connect a pre-authorized mini program in an instant messaging client to the virtual communication space, the instant messaging client being associated with the object identifier; and
the network communication module being further configured to exchange network communication data between the Internet of Things device and the mini program through the virtual communication space.

In the foregoing solution, the network communication module is further configured to transmit a first communication parameter to the instant messaging client associated with the object identifier, the first communication parameter including a virtual communication space identifier configured for the pre-authorized mini program in the instant messaging client to access the virtual communication space.

In the foregoing solution, the data processing module is further configured to: perform data verification on the request data; and transmit a second communication parameter to the Internet of Things server in response to successful data verification, the second communication parameter including a virtual communication space identifier configured for the Internet of Things server to connect the Internet of Things device to a virtual communication space corresponding to the virtual communication space identifier.

In the foregoing solution, the data processing module is further configured to perform at least one of a parameter check, a permission check, and risk control management, the parameter check being configured for checking data formats of the parameter of the Internet of Things device, the object identifier, and the parameter of the mini program, the permission check being configured for determining network communication permissions of the mini program based on the object identifier, and the risk control management being configured for performing anomaly detection based on the request data.

In the foregoing solution, the data processing module is further configured to: compare the identity credential parameter of the mini program with a pre-authorized identity credential parameter; obtain a validity period of the identity credential parameter of the mini program in response to a successful comparison; and determine, in response to the validity period not reaching an end date, that the mini program has permission to perform network communication with the Internet of Things device, and proceed to the processing of transmitting a second communication parameter to the Internet of Things server.

In the foregoing solution, the data processing module is further configured to: receive an identity parameter of the mini program, and use the identity parameter as a pre-authorized identity parameter, the identity parameter being synchronized to the communication server when the mini program receives an operation of authorizing the mini program to perform network communication.

In the foregoing solution, the network communication module is further configured to: receive an access request transmitted by the Internet of Things server, the access request comprising a network address of the Internet of Things server; and bind a network address of the Internet of Things device to the virtual communication space identifier.

An embodiment of this application provides a network communication apparatus, applied to an instant messaging client. The apparatus includes:
an information prompt module, configured to display prompt information in a pre-authorized mini program of the instant messaging client; and
a network communication module, configured to invoke the pre-authorized mini program to access a virtual communication space in response to a trigger operation for the prompt information.

An embodiment of this application provides an Internet of Things server, including:
a memory, configured to store computer-executable instructions or a computer program; and
a processor, configured to implement the network communication method according to the embodiments of this application when executing the computer-executable instructions or the computer program stored in the memory.

An embodiment of this application provides a communication server, including:
a memory, configured to store computer-executable instructions or a computer program; and
a processor, configured to implement the network communication method according to the embodiments of this application when executing the computer-executable instructions or the computer program stored in the memory.

An embodiment of this application provides a terminal device, on which an instant messaging client is installed. The terminal device includes:
a memory, configured to store computer-executable instructions or a computer program; and
a processor, configured to implement the network communication method according to the embodiments of this application when executing the computer-executable instructions or the computer program stored in the memory.

An embodiment of this application provides a computer-readable storage medium, having a computer program or computer-executable instructions stored therein, the computer program or the computer-executable instructions, when executed by a processor, implementing the network communication method according to the embodiments of this application.

An embodiment of this application provides a computer program product, including a computer program or computer-executable instructions, the computer program or the computer-executable instructions, when executed by a processor, implementing the network communication method according to the embodiments of this application.

The embodiments of this application include the following beneficial effects.

Network communication between an Internet of Things device and a mini program in an instant messaging client based on a virtual communication space is established through an Internet of Things server and a communication server. By using compatibility of various operating systems for the instant messaging client, communication between the Internet of Things device and terminals running various operating systems can be implemented. Therefore, it is unnecessary to develop dedicated network communication applications for various Internet of Things devices. By using the instant messaging client and the mini program, operation difficulty for users is reduced and operations become more convenient, thereby reducing development costs. By connecting the Internet of Things device to the virtual communication space through the Internet of Things server, related processing of the network communication is decoupled from the Internet of Things device, thereby avoiding increased hardware performance requirements of the Internet of Things device and satisfying low power consumption operation requirements of the Internet of Things device.

### BRIEF DESCRIPTION OF THE DRAWINGS

FIG. 1 is a schematic structural diagram of a network communication system architecture according to an embodiment of this application.
FIG. 2A is a schematic structural diagram of an Internet of Things server according to an embodiment of this application.
FIG. 2B is a schematic structural diagram of a communication server according to an embodiment of this application.
FIG. 2C is a schematic structural diagram of a terminal device according to an embodiment of this application.
FIG. 3A is a first schematic flowchart of a network communication method according to an embodiment of this application.
FIG. 3B is a second schematic flowchart of a network communication method according to an embodiment of this application.
FIG. 3C is a third schematic flowchart of a network communication method according to an embodiment of this application.
FIG. 4 is a schematic flowchart of a network communication method in an access control scenario according to an embodiment of this application.
FIG. 5A is a schematic diagram of an authorization interface of a mini program according to an embodiment of this application.
FIG. 5B is a schematic diagram of a call notification pop-up of an instant messaging client according to an embodiment of this application.
FIG. 5C is a first schematic diagram of a network communication interface of a mini program according to an embodiment of this application.
FIG. 5D is a second schematic diagram of a network communication interface of a mini program according to an embodiment of this application.
FIG. 6 is a schematic diagram of an exemplary system architecture of a network communication method according to an embodiment of this application.

The foregoing "first" and "second" are merely used to distinguish different solutions, and do not represent superiority or inferiority of the solutions or priority during implementation.

### DESCRIPTION OF EMBODIMENTS

To make objectives, technical solutions, and advantages of this application clearer, the following further describes this application in detail with accompanying drawings. The described embodiments do not be construed as limitation on this application. All other embodiments obtained by a person of ordinary skill in the art based on the embodiments of this application without creative efforts shall fall within the protection scope of this application.

"Some embodiments" involved in the following descriptions describes subsets of all possible embodiments. However, such subsets may be the same or different subsets of all the possible embodiments, and may be combined with each other without conflict.

In the following descriptions, the terms "first", "second", and "third" are merely intended to distinguish between similar objects and do not indicate a specific sequence of the objects. A specific order or sequence of the "first", "second", and "third" may be interchanged if permitted, so that the embodiments of this application described herein may be implemented in a sequence other than the sequence illustrated or described herein.

In the embodiments of this application, the term "module" or "unit" refers to a computer program having a pre-determined function or a part of a computer program, and operates together with other relevant parts to achieve a pre-determined objective, and may be all or partially implemented by using software, hardware (such as a processing circuit or a memory), or a combination thereof. Similarly, one processor (or a plurality of processors or memories) may be configured to implement one or more modules or units. In addition, each module or unit may be a part of an overall module or unit including a function of the module or unit.

Unless otherwise defined, meanings of all technical and scientific terms used in this specification are the same as those usually understood by a person skilled in the art. Terms used in the embodiments of this application are merely intended to describe objectives of the embodiments of this application, but are not intended to limit this application.

In the embodiments of this application, in practical application, collection and processing of related data need to strictly comply with the requirements of related national laws and regulations, informed consent or separate consent from personal information subjects needs to be obtained, and subsequent data use and processing need to be carried out within the scope of laws, regulations, and the authorization of the personal information subjects.

Before the embodiments of this application are further described in detail, terms involved in the embodiments of this application are described, and the following explanations are applicable to the terms involved in the embodiments of this application.
(1) A virtual communication space, also referred to as a communication room or room, is an abstract representation of an audio/video communication space, and is configured for isolating different call processes and ensuring security and independence of data. For example, users accessing the same room may receive network communication data (such as multimedia data) from each other. This is because when a communication server receives audio data transmitted by a device of one user in the room, the communication server transmits the network communication data to devices of other users in the room. Users in one room cannot receive network communication data from users who have not accessed the room.
(2) An object identifier (OpenID) is a user identifier and is configured for uniquely identifying a user on the Internet. For example, the object identifier may be an email address of the user or any other identifier capable of uniquely identifying the user, thereby allowing the user to access a plurality of websites by using a single login credential (such as a username and password).
(3) A virtual communication space identifier (RoomID) is an identifier of a virtual communication space and is configured for identifying a unique virtual communication space in network communication on the Internet. During the network communication, all network communication data may be labeled with the RoomID, and which data streams belong to which virtual communication space may be determined based on the RoomID, thereby ensuring correct distribution of the data streams.
(4) A voice over Internet protocol (VoIP) is a technology that allows voice communication to be transmitted through the Internet. The VoIP converts analog voice signals into digital data packets, which are transmitted through the Internet, and then converted back into analog voice signals at the destination, thereby enabling voice calls. The core of VoIP technology is to combine conventional telephone communication with Internet technology, using efficiency and extensive coverage of the Internet to provide cost-effective and flexible voice communication services. This technology supports a plurality of communication manners, including voice calls, video calls, instant messaging, file transfer, and the like.
(5) A VoIP software development kit (VoIP SDK) is a set of tools and libraries intended to assist developers in designing and creating Internet-based network communication. The VoIP SDK includes a series of application programming interfaces (APIs). These APIs provide methods for interacting with the communication server, and may further include example code, documentation, and other resources.
(6) Internet of Things (loT) is a new Internet-based network architecture and is a new technical mode that combines information technologies such as sensors, smart devices, cloud computing, big data, and artificial intelligence. The Internet of Things enables the connection of any object in the physical world to the Internet, enabling functions such as real-time monitoring, intelligent control, and remote operation, thereby achieving interconnection and interaction between objects and between humans and objects.
   Core technologies of the Internet of Things include sensor technology, network communication technology, cloud computing and big data technologies, artificial intelligence technology, and the like. Through application of these technologies, the Internet of Things may collect, transmit, process, and analyze information about physical objects such as sensors and smart devices, thereby enabling real-time monitoring and intelligent control on the physical world. In addition, the Internet of Things may also transfer various information in the physical world to users through the Internet, thereby bringing more convenience and intelligence for human production and life.
(7) A real-time operating system (RTOS) is an operating system intended to manage computer resources and ensure that real-time applications can complete execution of critical tasks within a specific time. The core characteristic of the RTOS is that the RTOS can respond to external events within a defined time and can process these events, thereby ensuring the real-time operation of the system.
(8) A mini program, also referred to as a sub-program or a network program, is a program that relies on a browser environment to run, and is developed based on Web technologies. The mini program can run in a browser environment without installation after being downloaded, for example, can run in any application that integrates a browser environment (such as an instant messaging client), or directly in a browser. Mini programs developed by different developers are compatible with each other at a development interface layer, thereby enabling code of the same mini program to run on a plurality of platforms.

Network communication solutions in the related art mainly have the following issues.
(1) Manufacturers of Internet of Things devices embed a software development kit for network communication into the Internet of Things devices and develop corresponding applications, so that the Internet of Things devices can perform network communication with electronic devices on which the applications are installed. However, applications need to be developed to be compatible with different electronic devices, resulting in high development costs.
(2) In a solution in which a third-party company or its product providing network communication services installs corresponding client software or applications on the Internet of Things devices to implement network communication, specifically, adaptation is required for various RTOS chips on the market. In other words, during promotion of the network communication solution, adaption issues of different chips are encountered, resulting in a large workload. In addition, this imposes certain requirements on hardware performance of the Internet of Things devices, making it difficult to adapt to Internet of Things devices with low power consumption.

The embodiments of this application provide a network communication method and apparatus, a device, a computer-readable storage medium, and a computer program product, to achieve compatibility and low power consumption of network communication for an Internet of Things device. The following describes exemplary applications of the electronic device provided in the embodiments of this application. The electronic device provided in the embodiments of this application may be implemented as various types of terminals such as a notebook computer, a tablet computer, a desktop computer, a set-top box, a smartphone, a smart speaker, a smartwatch, a smart television, and an in-vehicle terminal, or may be implemented as a server.

Using an example in which the embodiments of this application are applied to an access control verification scenario, according to the network communication method provided in the embodiments of this application, a first communication request may be transmitted to an Internet of Things server through the Internet of Things device (for example, a smart lock with a camera). After receiving the first communication request, the Internet of Things server transmits a second communication request to a communication server. The communication server receives the second communication request, parses data of the second communication request, and after successful verification, transmits a second communication parameter to the Internet of Things server, for the Internet of Things device to access a virtual communication space. In response to the Internet of Things server successfully receiving the second communication parameter, the communication server transmits a first communication parameter to a terminal device (for example, an instant messaging client may be installed), for the terminal device to invoke a mini program in the instant messaging client to access the virtual communication space. The Internet of Things device and the mini program exchange the network communication data (for example, the multimedia data) during network communication through the virtual communication space. In addition, operations such as facial labeling, setting temporary passwords, and one-click unlocking may be performed through the mini program, thereby enabling intelligent processing such as access control verification or unlocking.

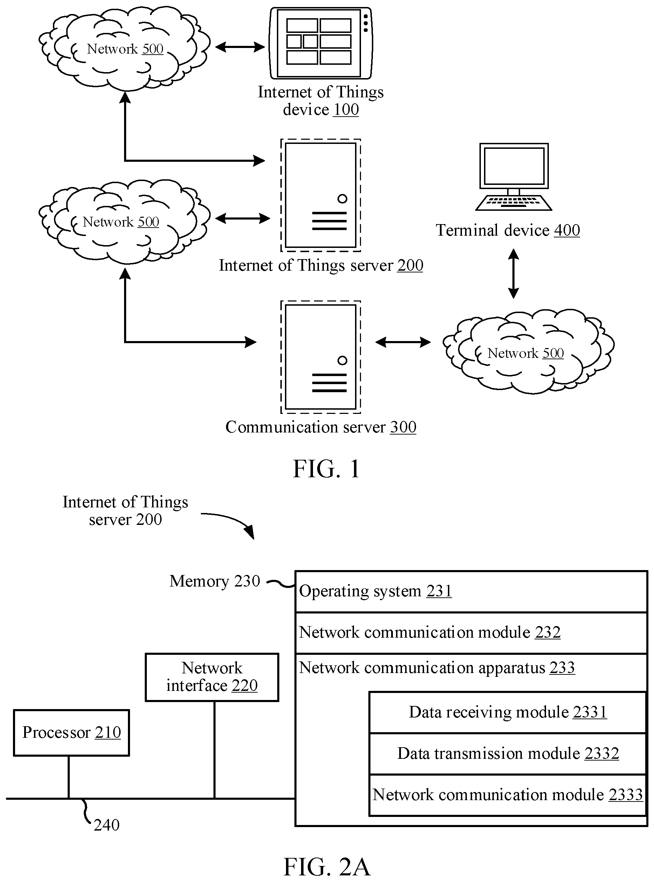

Referring to FIG. 1, FIG. 1 is a schematic structural diagram of a network communication system architecture according to an embodiment of this application. For example, FIG. 1 shows an Internet of Things device 100, an Internet of Things server 200, a communication server 300, a terminal device 400, and a network 500. The Internet of Things device 100 is connected to the Internet of Things server 200 through the network 500, the Internet of Things server 200 is connected to the communication server 300 through the network 500, and the communication server 300 is connected to the terminal device 400 through the network 500. The network 500 may be a wide area network, a local area network, or a combination thereof.

In some embodiments, the network communication system provided in this embodiment of this application may be cooperatively implemented by the Internet of Things device, the Internet of Things server, the communication server, and the terminal device. For example, the Internet of Things device 100 transmits a first communication request to the Internet of Things server 200. After receiving the first communication request, the Internet of Things server 200 transmits a second communication request to the communication server 300. The communication server 300 receives the second communication request, parses data of the second communication request, and after successful verification, transmits a second communication parameter to the Internet of Things server 200, for the Internet of Things device 100 to access a virtual communication space. In response to the Internet of Things server 200 successfully receiving the second communication parameter, the communication server 300 transmits the first communication parameter to the terminal device 400 (on which an instant messaging client is installed), for the terminal device 400 to invoke a mini program in the instant messaging client to access the virtual communication space. The Internet of Things device 100 exchanges communication data with the mini program in the terminal device 400 through the virtual communication space.

In some embodiments, the Internet of Things device, the Internet of Things server, the communication server, and the terminal device may implement the network communication method provided in the embodiments of this application by running various computer-executable instructions or a computer program. Using the terminal device as an example, the computer-executable instructions may be microprogram-level commands, machine instructions, or software instructions. The computer program may be a native program or a software module in the operating system, may be a local (native) application (APP), that is, a program that needs to be installed in the operating system to run, such as an instant messaging application, or may be a mini program embedded into any APP, that is, a program that can run only by being downloaded to a browser environment. In conclusion, the computer-executable instructions may be instructions in any form, and the computer program may be an application, a module, or a plug-in in any form.

An Internet of Things server is used as an example for performing network communication. Referring to FIG. 2A, FIG. 2A is a schematic structural diagram of an Internet of Things server according to an embodiment of this application. The Internet of Things server 200 shown in FIG. 2A includes at least one processor 210, a memory 230, and at least one network interface 220. Components in the Internet of Things server 200 are coupled together through a bus system 240. The bus system 240 is configured to implement connection and communication between the components. In addition to a data bus, the bus system 240 further includes a power bus, a control bus, and a status signal bus. However, for ease of clear description, all types of buses are labeled as the bus system 240 in FIG. 2A.

The processor 210 may be an integrated circuit chip having a signal processing ability, for example, a general processor, a digital signal processor (DSP), or another programmable logic device, a discrete gate or a transistor logic device, or a discrete hardware component, where the general processor may be a microprocessor, any conventional processor, or the like.

The memory 230 may be a removable memory, a non-removable memory, or a combination of a removable memory and a non-removable memory. Exemplary hardware devices include a solid state memory, a hard disk drive, an optical disc drive, and the like. In some embodiments, the memory 230 includes one or more storage devices physically remote from the processor 210.

The memory 230 may be a volatile memory or a non-volatile memory, or may include both a volatile memory and a non-volatile memory. The non-volatile memory may be a read only memory (ROM), or the volatile memory may be a random access memory (RAM). The memory 230 described in the embodiments of this application is intended to include, but is not limited to, memories of any suitable type.

In some embodiments, the memory 230 can store data to support various operations. An example of the data includes a program, a module, a data structure, or a subset or a superset of the data. The following is an example for description.

An operating system 231 includes a system program configured to handle various basic system services and perform a hardware related task, for example, a framework layer, a core library layer, or a driver layer, used for implementing various basic services and processing a task based on hardware.

A network communication module 232 is configured to reach another electronic device through one or more (wired or wireless) network interfaces 220. Exemplary network interfaces 220 include Bluetooth, wireless fidelity (Wi-Fi), a universal serial bus (USB), and the like.

In some embodiments, the apparatus provided in this embodiment of this application may be implemented in a software manner. FIG. 2A shows a network communication apparatus 233 stored in the memory 230. The network communication apparatus 233 may be software in a form of a program, a plug-in, or the like, and includes the following software modules: a data receiving module 2331, a data transmission module 2332, and a network communication module 2333. These modules are logical, and therefore may be arbitrarily combined or further divided based on implemented functions. Functions of the modules are described below.

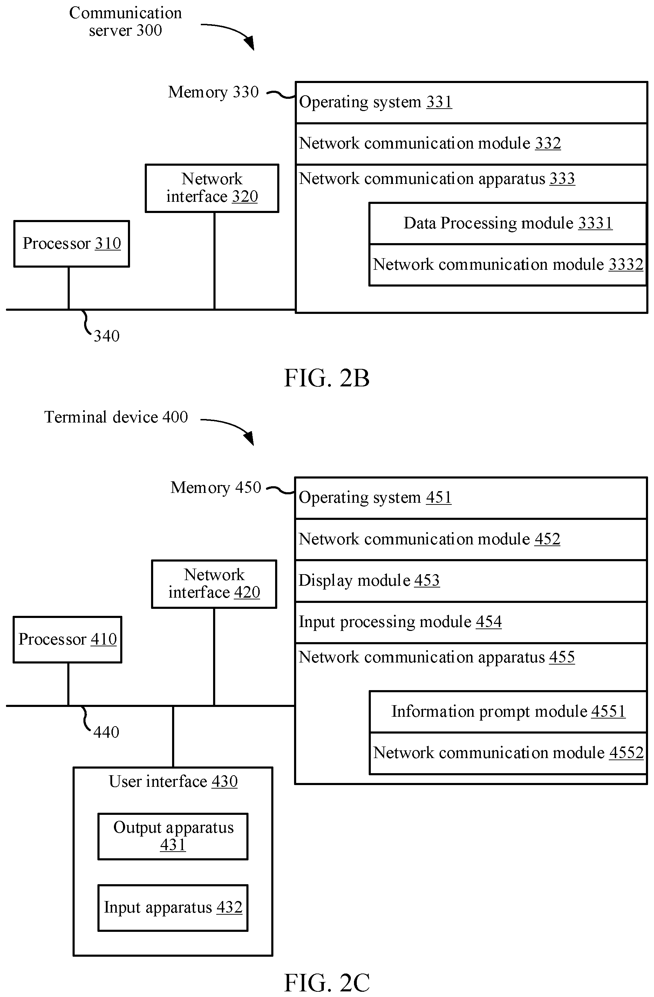

A communication server is used as an example for performing network communication. Referring to FIG. 2B, FIG. 2B is a schematic structural diagram of a communication server according to an embodiment of this application. The communication server 300 shown in FIG. 2B includes at least one processor 310, a memory 330, and at least one network interface 320. Components in the communication server 300 are coupled together through a bus system 340. The bus system 340 is configured to implement connection and communication between the components. In addition to a data bus, the bus system 340 further includes a power bus, a control bus, and a status signal bus. However, for ease of clear description, all types of buses are labeled as the bus system 340 in FIG. 2B. For specific descriptions of the processor 310 and the memory 330, refer to the foregoing descriptions. Details are not described herein again.

In some embodiments, the apparatus provided in this embodiment of this application may be implemented in a software manner. FIG. 2B shows a network communication apparatus 333 stored in the memory 330. The network communication apparatus 333 may be software in a form of a program, a plug-in, or the like, and includes the following software modules: a data processing module 3331 and a network communication module 3332. These modules are logical, and therefore may be arbitrarily combined or further divided based on implemented functions. Functions of the modules are described below.

A terminal device (on which an instant messaging client is installed) is used as an example for performing network communication. Referring to FIG. 2C, FIG. 2C is a schematic structural diagram of a terminal device according to an embodiment of this application. The terminal device 400 shown in FIG. 2C includes: at least one processor 410, a memory 450, at least one network interface 420, and a user interface 430. All components in the terminal device 400 are coupled together through a bus system 440.

The user interface 430 includes one or more output apparatuses 431 that can display media content, including one or more speakers and/or one or more visual displays. The user interface 430 also includes one or more input apparatuses 432, including a user interface component that facilitate user input such as a keyboard, a mouse, a microphone, a touchscreen display screen, a camera, another input button, or a control.

In some embodiments, the memory 450 can store data to support various operations. Examples of the data include a program, a module, and a data structure, or a subset or a superset thereof, such as an operating system 451 and a network communication module 452.

The memory 450 further includes a display module 453, configured to present information (such as a user interface configured for operating a peripheral device and displaying content and information) through one or more output apparatuses 431 (such as a display screen and a speaker) associated with a user interface 430.

The memory 450 further includes an input processing module 454, configured to: detect one or more user enters or interactions from one or more input devices 432, and translate the detected input or interaction.

In some embodiments, the apparatus provided in this embodiment of this application may be implemented in a software manner. FIG. 2C shows a network communication apparatus 455 stored in the memory 450. The network communication apparatus 333 may be software in a form of a program, a plug-in, or the like, and includes the following software modules: an information prompt module 4551 and a network communication module 4552. These modules are logical, and therefore may be arbitrarily combined or further divided based on implemented functions. Functions of the modules are described below.

In some embodiments, the Internet of Things server 200 or the communication server 300 may be an independent physical server, or a server cluster or a distributed system composed of a plurality of physical servers, or may alternatively be a cloud server that provides a cloud service, a cloud database, cloud computing, a cloud function, cloud storage, a network service, cloud communication, a middleware service, a domain name service, a security service, a content delivery network (CDN), and a basic cloud computing service such as big data and an artificial intelligence platform. The cloud service may be an interaction processing service, and is invoked by a terminal.

In some other embodiments, the apparatus provided in the embodiments of this application may be implemented in hardware. For example, the apparatus provided in the embodiments of this application may be implemented by using a hardware-coded processor, where the hardware-decoding processor is programed to perform the network communication method provided in the embodiments of this application. For example, the hardware-decoding processor may use one or more application specific integrated circuits (ASICs), digital signal processors (DSPs), programmable logic devices (PLDs), complex programmable logic devices (CPLDs), field-programmable gate arrays (FPGAs), or other electronic elements.

It should be understood that the various specific embodiments and technical features described herein may be combined with each other unless they are conflicting. The combined technical solutions still fall within the scope of disclosure of the present disclosure and are deemed to be part of the original disclosure of the present disclosure.

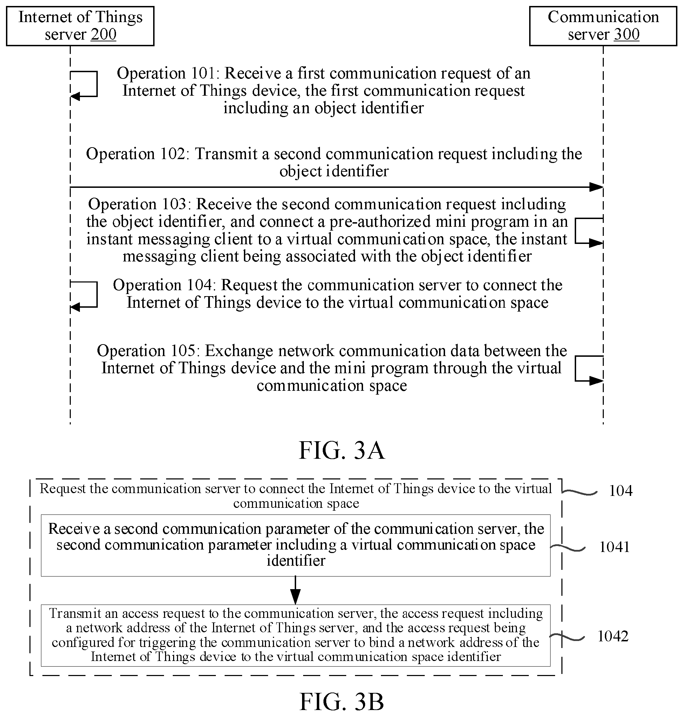

The following describes the network communication method provided in the embodiments of this application. Referring to FIG. 3A, FIG. 3A is a first schematic flowchart of a network communication method according to an embodiment of this application. Descriptions are provided with reference to operations shown in FIG. 3A.

Operation 101: An Internet of Things server receives a first communication request of an Internet of Things device, the first communication request including an object identifier.

In some embodiments, the Internet of Things device transmits the first communication request to the Internet of Things server. The first communication request includes the object identifier (an OpenID of a called user). In addition, the first communication request may further include request parameters related to communication with a mini program, such as a network communication type (for example, voice communication or video communication), an encryption requirement, a data transmission format, and an Internet of Things device identifier (for example, a device serial number), for the Internet of Things server to determine a user corresponding to the Internet of Things device based on the device serial number. The user herein refers to a user who has been authorized in the Internet of Things device to perform network communication with the mini program. Specific parameters included in the first communication request are not limited in the embodiments of this application. After receiving the first communication request, the Internet of Things server may verify, through an authorization and authentication procedure, whether the Internet of Things device has permission to communicate with the mini program, thereby ensuring security of network communication.

For example, the encryption requirement is one of request parameters related to communication with the mini program that may be included in the first communication request, and its core objective is to ensure security and privacy of data transmission between the Internet of Things device and the mini program.

Specifically, the encryption requirement specifies requirements on aspects such as a data encryption manner and encryption strength when the Internet of Things device exchanges data with the mini program. For example, it may require to encrypt to-be-transmitted data by using a symmetric encryption algorithm such as Advanced Encryption Standard (AES) or an asymmetric encryption algorithm such as Rivest-Shamir-Adleman (RSA). It may also a length of an encryption key, and an encryption mode such as a Cipher Block Chaining (CBC) or Electronic Codebook (ECB), to ensure that the data cannot be stolen, tampered with, or cracked by an unauthorized third party during transmission.

By specifying the encryption requirement, the Internet of Things server can coordinate, based on the parameter, the Internet of Things device and the mini program to use a consistent encryption policy, to construct a security barrier in the entire data transmission process, thereby satisfying requirements on security of network communication.

For example, the data transmission format is also an important request parameter related to communication with the mini program in the first communication request. It defines the structure and specification to be followed during data transmission between the Internet of Things device and the mini program.

Different scenarios and data types may require different transmission formats. A common example is a JavaScript object notation (JSON) format, which has features of being lightweight, easy to read, and easy to parse, making it suitable for transmitting structured data. An extensible markup language (XML) format is more suitable for description and exchange of complex data, and has good extensibility. In addition, a binary format and the like may also be used, which is suitable for a scenario requiring higher transmission efficiency.

After the data transmission format is specified, the Internet of Things device and the mini program can package, parse, and process data according to a unified rule, to avoid data transmission errors or information loss caused by format incompatibility, and ensure accuracy and effectiveness of data interaction, which is a basis for ensuring smooth communication.

Operation 102: The Internet of Things server transmits a second communication request including the object identifier to a communication server.

In some embodiments, in response to the Internet of Things server receiving the first communication request, after parsing the first communication request, the Internet of Things server transmits the second communication request including the object identifier to the communication server based on parameters such as the object identifier in the first communication request, the second communication request being configured for triggering the communication server to access a pre-authorized mini program in an instant messaging client to a virtual communication space, and the instant messaging client being associated with the object identifier.

For example, the Internet of Things server may initiate the second communication request (for example, a request based on the Hyper Text Transfer Protocol Secure (HTTPS)) to a backend interface of the communication server. The second communication request carries necessary information of a caller (the Internet of Things device) and a listener (the mini program), and the second communication request may further include a requested Uniform Resource Locator (URL), a request header, a request body, and the like. A request method of the second communication request may be a POST, and the like.

Using an example in which the second communication request is initiated through the POST request method, the second communication request may be a POST request, and a URL of the POST request may be represented as:
https://api.***.com/***/VoIP/call?access_token=ACCESS_TOKEN, where access_token represents an identity credential parameter (token) of the mini program, and the identity credential parameter of the mini program may be obtained in advance from the backend interface of the communication server. Referring to Table 1, Table 1 shows request parameters (in json format) included in the POST request.

**Table 1**

| Parameter | Data type | Description |
|---|---|---|
| model_ID | String | An Internet of Things device model corresponding to a mini program |
| sn | String | A device serial number of the Internet of Things device |
| OpenID | String | An object identifier of a called user; authorization from the user is required |
| room_type | String | A type of a virtual communication space (room): |
| | | Video communication: "video" |
| | | Audio communication: "voice" |
| listener_name | String | An incoming name displayed by an instant messaging client |
| version_type | number | A type of a mini program of a listener: |
| | | 0: Release version |
| | | 1: Development version |
| | | 2: Beta version |
| query | String | Page custom parameters of the mini program (for example, page title, background color, page layout, and page style) |
| caller_camera _status | number | A camera status of a caller (the Internet of Things device): |
| | | 0: Open |
| | | 1: Close |
| listener_came ra_status | number | A camera status of a listener (the mini program): |
| | | 0: Open |
| | | 1: Close |
| Payload | String | A custom field, configured for more precisely identifying an Internet of Things device of a device manufacturer, for example, more detailed field information of the Internet of Things device |

Operation 103: The communication server receives the second communication request including the object identifier, and connects a pre-authorized mini program in an instant messaging client to a virtual communication space, the instant messaging client being associated with the object identifier.

In some embodiments, the communication server connecting the pre-authorized mini program in the instant messaging client to the virtual communication space may be implemented in the following manners: transmitting the first communication parameter to the instant messaging client associated with the object identifier, the first communication parameter including a virtual communication space identifier (RoomID) configured for the pre-authorized mini program in the instant messaging client to access the virtual communication space based on the virtual communication space identifier, the virtual communication space being configured for the communication server to exchange network communication data between the Internet of Things device and the mini program.

For example, the pre-authorized mini program in the instant messaging client accessing the virtual communication space based on the virtual communication space identifier may be implemented in the following manners: transmitting, by the mini program, an access request to the communication server, the access request including a network address of the mini program; and after receiving the access request transmitted by the mini program, binding, by the communication server, the network address of the mini program to the virtual communication space identifier.

After the communication server receives the access request of the mini program, "binding" refers to establishing a one-to-one association relationship between two pieces of key information, and recording the one-to-one association relationship in a mapping table of the server. A core objective of this process is to enable the server to know "which mini program (network address) belongs to which virtual communication space (identifier)". The network address of the mini program may be understood as an "identity" of the mini program in a network, and is usually an IP address + a port number (for example, 192.168. 1.100: 8080), which is used by the server to locate and communicate with the mini program.

In some embodiments, the second communication request includes request data (for example, the data in Table 1 above). After receiving the second communication request that is transmitted by the Internet of Things server and that includes the object identifier, the communication server may further perform data verification on the request data, and transmit a second communication parameter to the Internet of Things server in response to successful data verification, the second communication parameter including the virtual communication space identifier configured for the Internet of Things server to connect the Internet of Things device to a virtual communication space corresponding to the virtual communication space identifier.

In some embodiments, the request data includes parameters (such as sn, caller_camera_status, and payload in Table 1) of the Internet of Things device, the object identifier (OpenID), and parameters (such as version_type and query in Table 1) of the mini program. The performing data verification on the request data may be implemented in the following manners: performing at least one of a parameter check, a permission check, and risk control management, the parameter check being configured for checking data formats of the parameter of the Internet of Things device, the object identifier, and the parameter of the mini program, the permission check being configured for determining network communication permissions of the mini program based on the object identifier, and the risk control management being configured for performing anomaly detection based on the request data.

For example, the parameter check is configured for ensuring that the request data transmitted through the POST request (second communication request) satisfies expectations and does not contain invalid content or errors. For example, the communication server side validates the received request data by checking whether the parameter satisfies the specified format, type, and range, for example, checking whether the object identifier and the device serial number of the Internet of Things device are empty, and whether the object identifier is within a valid range, thereby ensuring communication security and data integrity.

For example, the permission check is configured for confirming whether the Internet of Things device initiating the call has permission to make the call, for example, whether it is authorized or whether its account status is normal. For example, the communication server side may query a database based on the object identifier of the user for corresponding information such as a subscription plan and permission settings, to determine whether a called user (the mini program) authorizes the Internet of Things device to initiate the call.

For example, the risk control management is configured for identifying and preventing a possible deception behavior, service abuse, or abnormal traffic, thereby protecting the interests of service providers and users. For example, call activities (the network communication) are monitored and evaluated by setting a series of risk control rules, such as call frequency limits, to prevent a network communication service from being abused, reduce economic losses, and maintain normal operation of the service.

In some other embodiments, after the communication server receives the second communication request including the object identifier, and data verification on the second communication request succeeds, before the pre-authorized mini program in the instant messaging client is connected to the virtual communication space, the communication server creates the virtual communication space (for example, establishing a session by using a signaling protocol (such as the Session Initiation Protocol (SIP)), and proceeds to the processing of transmitting a second communication parameter to the Internet of Things server, the second communication parameter including the virtual communication space identifier (RoomID). When participants of network communication, that is, the caller (the Internet of Things device) and the listener (the mini program), both access a communication room, network communication between the caller and the listener is successfully completed.

Operation 104: The Internet of Things server requests the communication server to connect the Internet of Things device to the virtual communication space.

In some embodiments, referring to FIG. 3B, operation 104 shown in FIG. 3A may be implemented through the following operation 1041 to operation 1042. Details are described below.

Operation 1041: Receive a second communication parameter of the communication server, the second communication parameter including the virtual communication space identifier.

In some embodiments, in response to the successful data verification performed by the communication server on the request data of the second communication request, the communication server generates the second communication parameter, and transmits the second communication parameter to the Internet of Things server, the second communication parameter including the virtual communication space identifier (RoomID) configured for the Internet of Things server to connect the Internet of Things device to the virtual communication space corresponding to the virtual communication space identifier.

In some other embodiments, the second communication parameter may further include a network communication credential (corresponding to a ServerToken in Table 2 below) configured for the communication server to perform network communication authentication on the Internet of Things server, and in response to completion of the network communication authentication, the Internet of Things server connects the Internet of Things device to the corresponding virtual communication space through the virtual communication space identifier.

For example, the communication server performing network communication authentication on the Internet of Things server may be implemented in the following manners. When the Internet of Things server attempts to communicate with the communication server (for example, accessing the virtual communication space), the request transmitted by the Internet of Things server may carry the ServerToken. After receiving this ServerToken, the communication server may use a private key of the communication server to verify validity and integrity of the ServerToken. Because the ServerToken is encrypted during generation and distribution, only the communication server having the corresponding private key can verify the ServerToken. This ensures that only an authenticated Internet of Things server can communicate with the communication server. To further enhance security, the ServerToken may be dynamically generated and time-limited, which means that the communication server may update the ServerToken periodically, to prevent the old ServerToken from being abused. By using the ServerToken, the communication server can effectively prevent an unauthorized Internet of Things server from accessing a service thereof, thereby protecting data from being intercepted or tampered with by an unauthorized third party.

The following describes a principle in which the communication server verifies the ServerToken by using the private key.

The communication server verifies validity and integrity of the ServerToken by using the private key of the communication server, primarily based on an asymmetric encryption algorithm and a data validation mechanism. Essentially, through mathematical logic of encryption and decryption, it confirms source validity of the ServerToken (not forged), that its content is not tampered with (integrity), and whether it is within a validity period (time validity).

The asymmetric encryption algorithm (such as RSA or ECC) includes a pair of keys: a public key (which may be publicly distributed) and a private key (which is only held by the communication server and is remain strictly confidential). Its core characteristic is that data encrypted by using the public key can only be decrypted by using the corresponding private key, and for data signed by using the private key (generating a digest for encryption), validity of the signature can only be verified by using the corresponding public key.

In a ServerToken scenario, the ServerToken transmitted by the Internet of Things server is usually sensitive information (such as a device identifier, a timestamp, and a data hash) encrypted by using the public key of the communication server. As a private key holder, the communication server is the only entity capable of decrypting this Token. This operation ensures that only the communication server can interpret content of the Token, thereby eliminating a possibility of a third party cracking the Token after intercepting it.

The validity verification is mainly implemented through time validity information and an identity identifier that are included in the Token. The ServerToken is dynamically generated, and includes timestamps (for example, a generation time and an expiration time). After performing decryption, the communication server checks whether a current time falls within the validity period of the Token (for example, the generation time + 5 minutes), and determines the Token to be invalid if the current time expires (preventing the old Token from being abused). The Token usually includes a unique identifier of the Internet of Things server (such as a server ID), and the communication server validates whether the identifier is in a preset trusted server list, to ensure that the request originates from an authorized Internet of Things server.

The integrity verification is implemented through hash validation. When the ServerToken is generated, a hash value of the original request data (for example, a fixed-length digest calculated for a request parameter by using the SHA-256 algorithm) may be included. After decrypting the Token, the communication server recalculates a hash value of the currently received request data, and compares the hash value with the hash value carried in the Token. If the hash values are consistent, it indicates that the content of the Token (and the corresponding request data) is not tampered with. If the hash values are inconsistent, the Token is determined to be invalid (preventing data tampering by a man-in-the-middle).

The following describes a specific example of the verification process. The following describes the verification operation in detail by using an example in which the Internet of Things server (for example, a server of a manufacturer of smart door locks) initiates an access request to the communication server.

The communication server has an asymmetric key pair: a public key PubKey_Server (distributed to the authorized Internet of Things server) and a private key PriKey_Server (only held by the communication server).

The Internet of Things server needs to transmit the access request to the communication server. Request parameters include a device identifier, a request type, and the like, and also carry the dynamically generated ServerToken.

First, the ServerToken is generated (at the Internet of Things server side).

A process in which the Internet of Things server generates the ServerToken before transmitting the request is as follows:

Construct original information: including a server ID (server_ID: "iot_lock_001"), a request timestamp (timestamp: 1620000000, unit: seconds), an expiration time (expire: 1620000300, that is, expires 5 minutes later), and a hash value of the request data (data_hash: SHA256 ("model_ID=lock_01&sn=SN123...")).

The original information is encrypted by using the public key PubKey_Server of the communication server, to generate the ServerToken (an encrypted string, such as "{eyJhbGciOiJSUzI1NiIsInR5cCI6IkpXVCJ9..."}).

Then, the communication server receives the request and verifies the request.

After receiving the request of the Internet of Things server, the communication server verifies the ServerToken by using the private key PriKey_Server.

In the first stage of verification, the ServerToken is decrypted (as a basis for verifying source validity=).

The communication server decrypts the received ServerToken by using the private key PriKey_Server of the communication server, to obtain the original information:

```
             json
             {
               "server_id": "iot_lock_001",
               "timestamp": 1620000000,
               "expire": 1620000300,
               "data_hash": "a1b2c3d4e5f6..."
             }
```

If the decryption fails (for example, the private key does not match the Token), the Token is directly determined to be invalid (it indicates that the Token is not encrypted by using the public key of the communication server, and may be considered forged).

In the second stage of verification, validity (time and identity) is verified.

For time validity, the communication server obtains a current time (assumed to be 1620000200), and compares it with expiration (1620000300) in the Token. The current time falls within the validity period (does not expire), and the time validation succeeds. For identity validity, it is checked whether server_id: "iot_lock_001" is in a trusted server list (assumed to be registered) of the communication server. This confirms that the source is an authorized server, and the identity validation succeeds.

In the third stage of verification, integrity (hash comparison) is verified, and the communication server extracts currently received request data (for example, model_ID=lock_01&sn=SN123...) and calculates a hash value by using the same SHA-256 algorithm, to obtain current_hash: "a1b2c3d4e5f6...". The current_hash is compared with the data_hash in the Token, and the two are consistent. It indicates that both the request data and the content of the Token are not tampered with, and the integrity validation succeeds.

If all validations succeed, the communication server confirms that the Internet of Things server is an authorized party, and the request data is legal and complete, allows the Internet of Things server to access the virtual communication space, and returns the virtual communication space identifier. If any validation fails, an error is returned (for example, the Token expires, data is tampered with, the server is unauthorized), and the request is rejected.

Decryption is performed through an asymmetrically encrypted private key, to ensure that only the communication server can interpret the content of the Token, thereby preventing third party forging. Time validity and source validity of the Token are verified through the timestamp and the server ID. The integrity of the Token and the request data is verified by comparing hash value. A combination of the three stages implements strict identity authentication and data security guarantee for the Internet of Things server.

For example, the second communication parameter transmitted by the communication server to the Internet of Things server may be represented through Table 2.

**Table 2**

| Parameter | Data type | Description |
|---|---|---|
| Action | String | An event type for an Internet of Things server to access a communication server, which is fixed as join_VoIP_room for this interface |
| RoomID | String | A room ID (virtual communication space identifier) for this network communication (call) |
| SessionKey | String | A session key of this network communication, configured for encrypting network communication data transmitted during a session |
| ServerToken | String | A server side credential for this network communication |
| Payload | String | A custom field, configured for more precisely identifying an Internet of Things device of a device manufacturer, for example, more detailed field information of the Internet of Things device |
| ModelId | String | An Internet of Things device model corresponding to a mini program |
| Sn | String | A serial number of the Internet of Things device |

For example, the virtual communication space identifier is an identifier of the virtual communication space, and is configured for identifying a unique virtual communication space in network communication on the Internet. All network communication data may be labeled with the RoomID, and which data streams belong to which virtual communication space may be determined based on the RoomID, thereby ensuring correct distribution of the data streams.

After receiving the second communication parameter, the Internet of Things server may perform some validation operations (for example, verifying whether the RoomID in the second communication parameter is empty), to join the room by using a key field (for example, the RoomID) in the second communication parameter.

In some other embodiments, after the Internet of Things server receives the second communication parameter transmitted by the communication server (for example, the POST request is successfully returned), the communication server transmits the first communication parameter to the instant messaging client. The first communication parameter includes the virtual communication space identifier (RoomID) configured for the mini program to access the virtual communication space based on the virtual communication space identifier, and the mini program is pre-authorized in the instant messaging client.

Operation 1042: Transmit an access request to the communication server, the access request including a network address of the Internet of Things server, and the access request being configured for triggering the communication server to bind a network address of the Internet of Things device to the virtual communication space identifier.

In some embodiments, the access request is transmitted to the communication server through a software development kit integrated in the Internet of Things server for network communication, the access request including a network address of the Internet of Things server, and the access request being configured for triggering the communication server to bind a network address of the Internet of Things device to the virtual communication space identifier.

For example, the software development kit (VoIP SDK) for network communication is installed and configured on the Internet of Things server, for example, by downloading the VoIP SDK, following the installation guide, and setting environment variables. Next, an initialization function of the VoIP SDK is invoked with necessary configuration parameters, for example, a server address, a port, and authentication information, to initialize the VoIP SDK. After the VoIP SDK is initialized, a room access interface of the VoIP SDK is invoked to transmit the access request (the request may include the network communication credential (corresponding to the ServerToken in Table 2)) to the communication server, to join the room.

Continuing the foregoing example, the VoIP SDK transmits the access request to the communication server by using the room access interface. The access request may include information such as the network communication credential (ServerToken), the network address of the Internet of Things server, a requested communication service type of, and a supported protocol. After receiving the access request, the communication server may perform authentication and verification (for example, authenticating an identity of the VoIP SDK in the Internet of Things server, and further verifying validity of the ServerToken after the authentication succeeds). If the authentication and verification succeed, the communication server connects the Internet of Things server to the room by binding the network address of the Internet of Things device to the virtual communication space identifier. For example, the network address of the Internet of Things device is labeled with a RoomID, and a network address to which data streams in network communication need to be distributed is determined based on the RoomID, thereby ensuring correct distribution of the data streams of the network communication data during a session. The communication server may further return a session key or other information for subsequent communication.

For example, the virtual communication space (room) of the communication server may perform session control. The virtual communication space includes information required for call management, for example, at least one of the virtual communication space identifier, information about participants in a network call, and a call status (for example, in call, on hold, or busy), and the session control may be implemented through the SIP. The virtual communication space may manage the flow of the network communication data (such as multimedia data), including data compression, encryption, packaging, unpacking, and the like. The processing ensures efficiency and security of data transmission in the network. Herein, the virtual communication space does not directly perform functions such as data compression, but serves as an environment and a platform for technical functions such as data compression. In this virtual communication space, participants in the session perform communication and data exchange through a transport layer protocol or the like.

The virtual communication space does not directly perform functions such as data compression, but serves as the environment and the platform for technical functions such as data compression. Specifically, the participants in the session may submit operation instructions for data compression, encryption, packaging, and unpacking in the virtual communication space, and the virtual communication server invokes corresponding tools to complete the corresponding operations. These tools may be pre-installed in the virtual communication server, or may be installed by the participants of the session for the virtual communication space the participants join. An operational scope of the tools is limited to the virtual communication space the participants of the session join, thereby enabling personalized installation and use of tools for different virtual communication spaces.

Still refer to FIG. 3A. Operation 105: The communication server exchanges network communication data between the Internet of Things device and the mini program through the virtual communication space.

In some embodiments, the communication server is configured to exchange the network communication data between the Internet of Things device and the mini program in the following manners. The Internet of Things server receives the network communication data collected by the Internet of Things device, queries a network address of the mini program bound to the virtual communication space identifier (that is, the network address of the mini program bound to the same virtual communication space identifier as the network address of the Internet of Things device), transmits, through the software development kit in the Internet of Things server based on the network address of the mini program, the network communication data collected by the Internet of Things device to the mini program, receives, through the software development kit, the network communication data collected by the mini program, queries a network address of the Internet of Things device bound to the virtual communication space identifier, and transmits, based on the network address of the Internet of Things device, the network communication data collected by the mini program to the Internet of Things device.

For example, the VoIP SDK runs on the Internet of Things server, and transmit network communication data (multimedia data)by using existing audio and video channels between the Internet of Things server and the Internet of Things device. A data stream path during network communication may include:
device uplink, that is, in a transmission direction from the Internet of Things device to the mini program: the Internet of Things device collects audio/video→audio/video streams are transmitted to the Internet of Things server by using an existing channel between the Internet of Things server and the Internet of Things device→the audio/video streams are transmitted to a transmission interface of the VoIP SDK in the Internet of Things server→the VoIP SDK transmits, by using a proprietary protocol, the audio/video streams to a terminal device running the mini program (for example, a mobile phone on which the instant messaging client is installed)→the terminal device performs audio playback and video decoding for rendering (for example, displaying a video on the interface of the mini program); and
device downlink, that is, in a transmission direction from the mini program to the Internet of Things device: the terminal device configured to run the mini program performs audio/video collection→a receiving interface of the VoIP SDK in the Internet of Things server receives audio/video streams→the existing channel between the Internet of Things server and the Internet of Things device is used to transmit the audio/video streams to the Internet of Things device→the Internet of Things device performs audio playback and video decoding for display.

Herein, the network communication data may be packaged, encoded/decoded, encrypted, and transmitted through the VoIP SDK.

For example, during network communication, the network address of the Internet of Things device may be bound to the RoomID, and the network communication data may be labeled with the RoomID. It is assumed that a virtual communication space identifier of a virtual communication space A is 001, and a virtual communication space identifier of a virtual communication space B is 002. When an Internet of Things device A and a mini program A in the virtual communication space A perform network communication, a header of a data packet of network communication data exchanged during network communication may include a RoomID of a current session. When receiving the data packet, the Internet of Things device A and the mini program A first check the RoomID in the header of the data packet. If the RoomID matches the RoomID (001) of the current session, the data packet continues to be processed. If the RoomID does not match the RoomID of the current session, processing is rejected or an error is prompted, to determine which data streams belong to which virtual communication space based on the RoomID, thereby ensuring correct distribution of the data streams. When the network communication ends, the Internet of Things device may notify the VoIP SDK in the Internet of Things server (the Internet of Things device may be connected to the Internet of Things server through Internet of Things technology) to release resources and end the session.

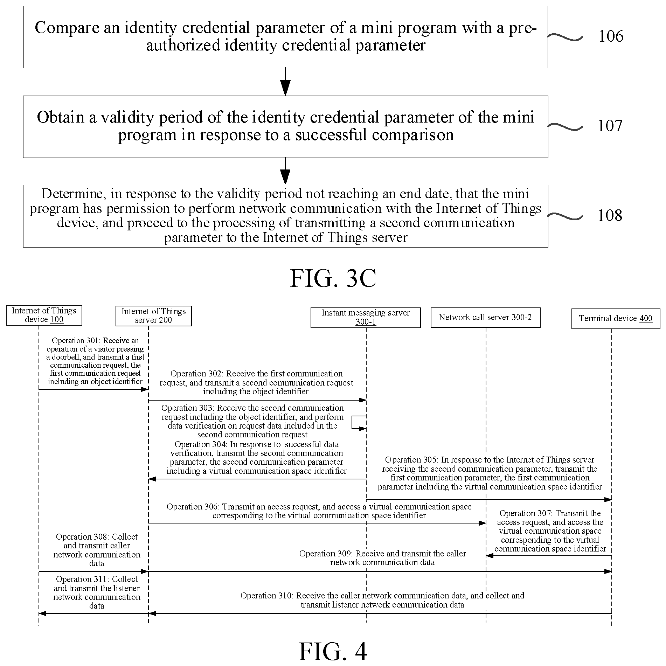

In some embodiments, the second communication request includes the identity credential parameter (for example, the access_token described above) of the mini program. Referring to FIG. 3C, before the communication server transmits the second communication parameter to the Internet of Things server, the communication server may further perform the following operation 106 to operation 108. Details are described below.

Operation 106: Compare the identity credential parameter of the mini program with a pre-authorized identity credential parameter.

In some embodiments, before comparing the identity credential parameter of the mini program with the pre-authorized identity credential parameter, the communication server may further receive an identity parameter of the mini program, and use the identity parameter as a pre-authorized identity parameter, the identity parameter being synchronized to the communication server when the mini program receives an operation of authorizing the mini program to perform network communication.

For example, the identity credential parameter (access_token) of the mini program may be configured for verifying a user identity and authorizing access to the resources. The pre-authorized identity credential parameter is an identity parameter of the mini program that has been authorized to perform network communication in the instant messaging client. Comparison between the two parameters may ensure that the mini program has obtained the valid authorization of the user beforehand.

For example, user authorization of permissions of the mini program may be implemented in the following manners. When the user uses the mini program, the mini program requests specific permissions from the user, for example, requesting to enable voice and video call notifications. Theses permissions are usually necessary for the mini program to implement functions of the mini program. When the mini program requests permissions, the instant messaging client of the user pops up a prompt box, to describe which permissions the mini program requires, and specific purposes of these permissions. The user may select "Allow" or "Reject" in the prompt box to allow or reject a permission request of the mini program. If the user selects "Allow", the mini program obtains corresponding permissions. If the user selects "Reject", the mini program does not obtain these permissions, and after the user makes a choice, the mini program receives an authorization result of the user. If the user allows the permission request, the mini program may perform a corresponding operation by using the permission, and synchronize the identity parameter of the mini program to the communication server. If the user rejects the permission request, the mini program cannot use the permission. The user may manage permissions that are authorized to the mini program in settings of the terminal device. If the user changes permission settings, the mini program may adjust functions thereof accordingly. To ensure user privacy and data security, when requesting the permission, the mini program clearly notifies the user of the purpose of the permission, and complies with related privacy policies and regulation requirements. In addition, after obtaining the permission, the mini program uses the permission strictly within authorized range, and does not collect or use user data beyond the granted permission.

Operation 107: Obtain a validity period of the identity credential parameter of the mini program in response to a successful comparison.

In some embodiments, after the successful comparison, the communication server queries the validity period of the mini program. Herein, the validity period may vary from several minutes to several days. This is not limited in the embodiments of this application.

Operation 108: Determine, in response to the validity period not reaching an end date, that the mini program has permission to perform network communication with the Internet of Things device, and proceed to the processing of transmitting a second communication parameter to the Internet of Things server.

In some embodiments, when the identity credential parameter of the mini program does not expire, it is determined that the mini program has permission to perform network communication with the Internet of Things device, and it proceeds to the processing of transmitting a second communication parameter to the Internet of Things server.

In some embodiments, after receiving the first communication parameter transmitted by the communication server, the instant messaging client may display prompt information in the pre-authorized mini program of the instant messaging client, or display the prompt information on a user interface of the instant messaging client; and invoke, in response to a trigger operation for the prompt information, the pre-authorized mini program to access the virtual communication space.

For example, after the first communication parameter transmitted by the communication server is received, the mini program or the user interface of the instant messaging client displays call information. For example, a pop-up displays caller information and controls indicating whether the call is connected. In response to a trigger operation of the user on a connection control, a network call function of the mini program is invoked. The mini program backend joins the corresponding virtual communication space (room) based on the virtual communication space identifier included in the first communication parameter, and displays a network call interface of the room, thereby enabling a network call with the Internet of Things device.

A powerful information receiving capability of the instant messaging client is used, and the prompt information (for example, ringing of the mobile phone of the user or pop-up notification) is displayed through the mini program or the instant messaging client, thereby improving efficiency of receiving and clicking the prompt information by the user. In addition, because the mini program can be used without downloading and installation, adaption to different RTOS chips in the related art is avoided, and promotion difficulty is reduced. For example, the user may directly access the different RTOS chips by scanning a quick response code or performing a search, and click-to-use convenience of the mini program is used, so that the access barrier for the user and promotion difficulty of network communication can be reduced.

An exemplary application of this embodiment of this application in an access control scenario is described below. In this case, the Internet of Things device may be a smart door lock in the user's home. Referring to FIG. 4, FIG. 4 is a schematic flowchart of a network communication method in an access control scenario according to an embodiment of this application. When a communication server is implemented as a combination of servers, the foregoing communication server 300 includes an instant messaging server 300-1 and a network call server 300-2 shown in FIG. 4, and the following describes the instant messaging server 300-1 and the network call server 300-2 in detail with reference to FIG. 4.

Operation 301: An Internet of Things device receives an operation of a visitor pressing a doorbell, and transmits a first communication request to an Internet of Things server, the first communication request including an object identifier.

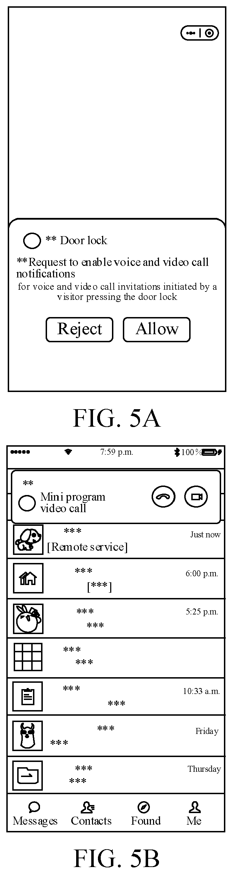

In some embodiments, before the Internet of Things device (the smart door lock) transmits the first communication request, the user is required to perform an authorization operation on the mini program. Referring to FIG. 5A, FIG. 5A is a schematic diagram of an authorization interface of a mini program according to an embodiment of this application. It can be seen that when the user uses the mini program (for example, registration or login), a prompt box pops up on the user interface of the mini program, indicating which permissions the mini program requires, and specific purposes of these permissions, for example, "**Request to enable voice and video call notifications" and "for voice and video call invitations initiated by a visitor pressing a door lock" in FIG. 5A. The user may select "Allow" or "Reject" in the prompt box to allow or reject the permission request of the mini program.

In some embodiments, in response to a trigger operation on a call request control of the Internet of Things device (for example, a visitor pressing a call button of the door lock). The Internet of Things device transmits the first communication request to the Internet of Things server, the first communication request including the object identifier configured for indicating an identity of a listener. Herein, the object identifier may be transmitted to the Internet of Things device when the user binds to the Internet of Things device. For example, the user accesses an official website or the mini program of the Internet of Things device, and adds the Internet of Things device to a user account through a serial number of the Internet of Things device, thereby enabling the user to manage the Internet of Things device. After receiving bound user account information (including the object identifier), the Internet of Things server synchronizes the bound user account information to the corresponding Internet of Things device. A manner of obtaining the object identifier by the Internet of Things device is not limited in the embodiments of this application.

Operation 302: The Internet of Things server receives the first communication request, and transmits a second communication request including the object identifier to an instant messaging server.

In some embodiments, the first communication request includes the object identifier (an OpenID of a called user), and may further include request parameters related to communication with the mini program, such as a network communication type (for example, voice communication and video communication), an encryption requirement, a data transmission format, and an Internet of Things device identifier (for example, a device serial number). Specific parameters included in the first communication request are not limited in the embodiments of this application.

In some embodiments, the Internet of Things server may initiate the second communication request (for example, a request based on the Hyper Text Transfer Protocol Secure (HTTPS)) to the backend interface of the instant messaging server. The second communication request includes necessary information of a caller (the Internet of Things device) and a listener (the mini program), and the second communication request may include a requested Uniform Resource Locator (URL), a request header, a request body, and the like. A request method of the second communication request may be a POST, and the like. For examples of the request data included in the second communication request, refer to the descriptions in Table 1 above. Details are not described herein again.

Operation 303: The instant messaging server receives the second communication request including the object identifier, and performs data verification on request data included in the second communication request.

In some embodiments, the second communication request includes the request data (for example, the data in Table 1 above). For example, the request data includes parameters (such as sn, caller_camera_status, and payload in Table 1) of the Internet of Things device, the object identifier (OpenID), and parameters (such as version_type and query in Table 1) of the mini program. The performing data verification on the request data includes: performing at least one of a parameter check, a permission check, and risk control management, the parameter check being configured for checking the data formats of the parameter of the Internet of Things device, the object identifier, and the parameter of the mini program, the permission check being configured for determining network communication permissions of the mini program based on the object identifier, and the risk control management being configured for performing anomaly detection based on the request data.

For example, the parameter check is configured for ensuring that the request data transmitted through the second communication request satisfies expectations and does not contain invalid content or errors, for example, the communication server side validates the received request data by checking whether the parameter satisfies the specified format, type, and range; the permission check is configured for confirming whether the Internet of Things device initiating the call has permission to make the call, for example, whether it is authorized or whether its account status is normal; and the risk control management is configured for identifying and preventing a possible deception behavior, service abuse, or abnormal traffic, thereby protecting the interests of service providers and users. For example, call activities (the network communication) are monitored and evaluated by setting a series of risk control rules, such as call frequency limits, to prevent a network communication service from being abused, reduce economic losses, and maintain normal operation of the service.

Operation 304: In response to successful data verification, the instant messaging server transmits the second communication parameter to the Internet of Things server, the second communication parameter including a virtual communication space identifier.

In some embodiments, in response to successful data verification of the instant messaging server on the request data of the second communication request, the second communication parameter is transmitted to the Internet of Things server, the second communication parameter including the virtual communication space identifier (RoomID) configured for the Internet of Things server to connect the Internet of Things device to the virtual communication space corresponding to the virtual communication space identifier.

In some other embodiments, after the Internet of Things server receives the second communication parameter transmitted by the instant messaging server, the instant messaging server may transmit the RoomID to the network call server, so that the network call server creates a corresponding virtual communication space (for example, establishing a session by using a signaling protocol (such as the Session Initiation Protocol (SIP)), and waits for network communication participants (the Internet of Things device and the mini program) to join. When both the caller (the Internet of Things device) and the listener (the mini program) join the room, network communication between the caller and the listener is successfully completed.

In some other embodiments, the second communication parameter further includes a network communication credential (corresponding to the ServerToken in Table 2 above) configured for the network call server to perform network communication authentication on the Internet of Things server, and in response to completion of the network communication authentication, the Internet of Things server connects the Internet of Things device to the corresponding virtual communication space through the virtual communication space identifier.

For example, after receiving the second communication parameter, the Internet of Things server may perform some validation operations (for example, verifying whether the RoomID in the second communication parameter is empty), to join the room by using a key field (RoomID) in the second communication parameter. For the second communication parameter transmitted by the instant messaging server to the Internet of Things server, refer to the foregoing descriptions in Table 2. Details are not described herein again.

Operation 305: In response to the Internet of Things server receiving the second communication parameter, the instant messaging server transmits the first communication parameter to a terminal device, the first communication parameter including the virtual communication space identifier.

In some embodiments, in response to the Internet of Things server returning a message to the instant messaging server indicating that the second communication parameter is successfully received, the instant messaging server transmits the first communication parameter to the terminal device (on which the instant messaging client is installed), the first communication parameter including the virtual communication space identifier, so that the terminal device invokes the mini program in the instant messaging client to access the virtual communication space.

In some embodiments, after receiving the first communication parameter transmitted by the communication server, the instant messaging client may display prompt information in the pre-authorized mini program of the instant messaging client, or display the prompt information on a user interface of the instant messaging client; and invoke, in response to a trigger operation for the prompt information, the pre-authorized mini program to access the virtual communication space.

For example, referring to FIG. 5B, FIG. 5B is a schematic diagram of a call notification pop-up of an instant messaging client according to an embodiment of this application. After the first communication parameter transmitted by the instant messaging server is received, the mini program or the user interface of the instant messaging client may display call information (for example, a call notification pop-up). For example, a pop-up (corresponding to a "mini program video call" pop-up in FIG. 5B) displays caller information and controls indicating whether the call is connected. In response to a trigger operation of the user on a connection control, a network call function of the mini program is invoked. The mini program backend joins the corresponding virtual communication space (room) based on the virtual communication space identifier included in the first communication parameter, and displays a network call interface of the room, thereby enabling a network call with the Internet of Things device.

Operation 306: The Internet of Things server transmits an access request to a network call server, and accesses a virtual communication space corresponding to the virtual communication space identifier.

In some embodiments, the access request is transmitted to the network call server through the software development kit integrated in the Internet of Things server for network communication.

For example, the software development kit (VoIP SDK) for network communication is installed and configured on the Internet of Things server, for example, by downloading the VoIP SDK, following the installation guide, and setting environment variables. Next, an initialization function of the VoIP SDK is invoked with necessary configuration parameters, for example, a server address, a port, and authentication information, to initialize the VoIP SDK. After the VoIP SDK is initialized, a room access interface of the VoIP SDK is invoked to transmit the access request (the request may include the network communication credential (corresponding to the ServerToken in Table 2)) to the network call server.

In some embodiments, the access request includes the network address of the Internet of Things server, for the communication server to bind the network address of the Internet of Things device to the virtual communication space identifier.

For example, after receiving the access request, the network call server may perform authentication and verification (for example, checking whether the VoIP SDK in the Internet of Things server is online, and verifying validity of the ServerToken). If the request succeeds, the network call server confirms that the Internet of Things server joins the room, and may further bind the network address of the Internet of Things device to the virtual communication space identifier. For example, the network address of the Internet of Things device is labeled with a RoomID, and a network address to which data streams in network communication need to be distributed is determined based on the RoomID, thereby ensuring correct distribution of the data streams. The instant messaging server may further return a session key or other information for subsequent communication.

For example, the virtual communication space (room) may perform session control. The virtual communication space includes information required for call management, for example, the virtual communication space identifier, the information about participants in a network call, and a call status (for example, in call, on hold, or busy), and the session control may be implemented through the Session Initiation Protocol (SIP). The virtual communication space may manage the flow of the network communication data, including data compression, encryption, packaging, unpacking, and the like. The processing ensures efficiency and security of data transmission in the network. Herein, the virtual communication space does not directly perform functions such as data compression, but serves as an environment and a platform for technical functions such as data compression. In this virtual communication environment, participants in the session perform communication and data exchange through a transport layer protocol or the like.

Operation 307: The terminal device transmits the access request to the network call server, and accesses the virtual communication space corresponding to the virtual communication space identifier.

In some embodiments, the terminal device (on which the instant messaging client is installed) invokes the mini program in the instant messaging client to transmit the access request to the network call server. The request may include the virtual communication space identifier. After receiving the access request transmitted by the terminal device, the network call server may check a registration status of the user of the mini program, and access the terminal device (running the mini program) to the corresponding virtual communication space after confirming that the user is online.

Operation 308: The Internet of Things device collects caller network communication data, and transmits the caller network communication data to the Internet of Things server 200.

In some embodiments, in response to both the caller (the Internet of Things device, where the Internet of Things device and the Internet of Things server may be connected through Internet of Things technology to receive/transmit communication data from/to each other, so that connecting the Internet of Things server to the room is equivalent to connecting the Internet of Things device to the room) and the listener (the terminal device running the mini program) joining the room, the call between the caller and the listener is successfully completed. The Internet of Things device collects audio/video (the caller network communication data), and transmits the audio/video to the Internet of Things server by using an existing channel between the Internet of Things server and the Internet of Things device.

Operation 309: The Internet of Things server receives the caller network communication data, and transmits the caller network communication data to the terminal device.

In some embodiments, the Internet of Things server receives the caller network communication data collected by the Internet of Things device, queries the network address of the mini program bound to the virtual communication space identifier (that is, the network address of the mini program bound to the same virtual communication space identifier as the network address of the Internet of Things device), and transmits, based on the network address of the mini program through the software development kit (VoIP SDK) in the Internet of Things server, the caller network communication data collected by the Internet of Things device to the terminal device running the mini program.

Operation 310: The terminal device receives the caller network communication data, collects listener network communication data, and transmits the listener network communication data to the Internet of Things server.

In some embodiments, the terminal device receives the caller network communication data, and performs audio playback and video decoding on the data for display. In addition, the terminal device collects the network communication data (the listener network communication data), and transmits the listener network communication data to the Internet of Things server.

Operation 311: The Internet of Things server receives the listener network communication data, and transmits the listener network communication data to the Internet of Things device.

In some embodiments, the Internet of Things server receives the listener network communication data through the software development kit.

For example, the VoIP SDK runs on the Internet of Things server, and pushes and pulls audio and video by using existing audio and video channels between the Internet of Things server and the Internet of Things device. A data stream path during network communication may include:
device uplink: the Internet of Things device collects audio/video→audio/video streams are transmitted to the Internet of Things server by using an existing channel between the Internet of Things server and the Internet of Things device→the audio/video streams are transmitted to a transmission interface of the VoIP SDK in the Internet of Things server→the VoIP SDK transmits, by using a proprietary protocol, the audio/video streams to a terminal device running the mini program (for example, a mobile phone on which an instant messaging client is installed)→the terminal device performs audio playback and video decoding for rendering (for example, displaying a video on the interface of the mini program); and
device downlink: the terminal device configured to run the mini program performs audio/video collection→a receiving interface of the VoIP SDK in the Internet of Things server receives the audio/video streams→the existing channel between the Internet of Things server and the Internet of Things device is used to transmit the audio/video streams to the Internet of Things device→the Internet of Things device performs audio playback and video decoding for display.

Herein, the network communication data may be packaged, encoded/decoded, encrypted, and transmitted through the VoIP SDK.

For example, during network communication, the network address of the Internet of Things device may be bound to the RoomID, or all network communication data may be labeled with the RoomID, and which data streams belong to which virtual communication space may be determined based on the RoomID, thereby ensuring correct distribution of the data streams. When the network communication ends, the Internet of Things device may notify the VoIP SDK in the Internet of Things server (the Internet of Things device may be connected to the Internet of Things server through Internet of Things technology) to release resources and end the session.

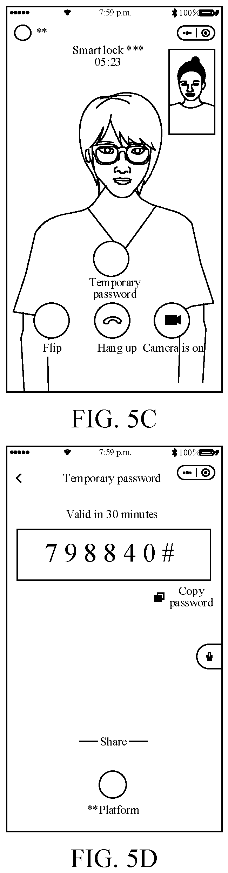

For example, referring to FIG. 5C, FIG. 5C is a first schematic diagram of a network communication interface of a mini program according to an embodiment of this application. After both the Internet of Things server and the mini program access the virtual communication space, both network communication parties exchange the communication data. Referring to FIG. 5D, FIG. 5D is a second schematic diagram of a network communication interface of a mini program according to an embodiment of this application. The mini program may control the Internet of Things device by defining a page function. For example, a temporary password control is clicked on the interface shown in FIG. 5C, and a temporary password of the Internet of Things device is updated on the interface shown in FIG. 5D, so that a visitor unlocks an access control through the temporary password, to achieve intelligent control of the Internet of Things device. For example, after the mini program generates the temporary password, the temporary password is transmitted to a smart lock side (the Internet of Things device) through a network, and the smart lock determines whether unlocking is allowed by comparing the temporary password with a locally entered password. A validity period of the temporary password may be customized.

Through operation 301 to operation 311, the Internet of Things server receives the first communication request of the Internet of Things device, and transmits the second communication request to the communication server, to trigger the Internet of Things device and the mini program to access the virtual communication space, thereby exchanging network communication data. This enables network communication between the Internet of Things device and the mini program without the need to develop a network communication application for the Internet of Things device, and is compatible with different operating systems, thereby reducing development costs, and avoiding a problem in the related art that developing applications compatible with different electronic devices causes high development costs. Because the second communication request is transmitted and the Internet of Things device is connected to the virtual communication space through the Internet of Things server, the solution is also suitable for Internet of Things devices with low power consumption, thereby reducing strict performance requirements on the Internet of Things device. This resolves the foregoing problem in the related art that hardware performance requirements on the Internet of Things device make it difficult to adapt to Internet of Things devices with low power consumption.

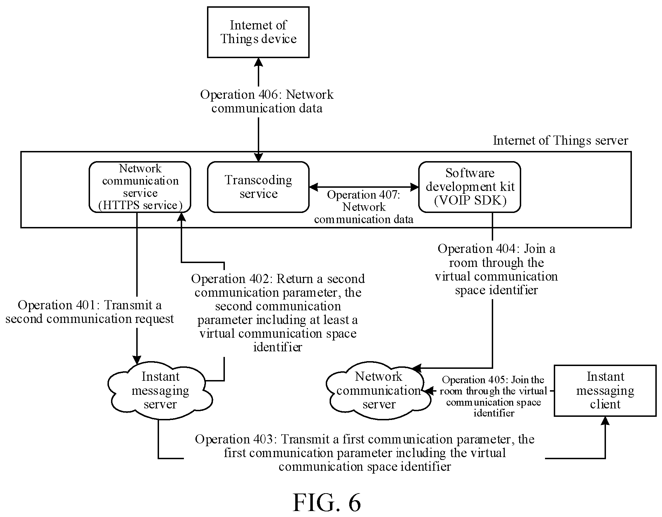

The following further describes a system architecture of the network communication method provided in the embodiments of this application. Referring to FIG. 6, FIG. 6 is a schematic diagram of an exemplary system architecture of a network communication method according to an embodiment of this application. An Internet of Things server may include a network communication service (an HTTPS service), a transcoding service, and a software development kit (VoIP SDK). Details are described with reference to FIG. 6.

Operation 401: An Internet of Things server initiates a second communication request to an instant messaging server through a network communication service.

In some embodiments, the second communication request includes necessary information (for example, an object identifier (OpenID) of a called user) of a caller (an Internet of Things device) and a listener (a mini program). The second communication request may include a requested Uniform Resource Locator (URL), a request header, a request body, or the like. A request method of the second communication request may be a POST, and the like. Herein, for a specific implementation of the second communication request, refer to the description of operation 302. Details are not described herein again.

In some other embodiments, the Internet of Things device transmits a first communication request to the Internet of Things server, the first communication request including the object identifier (the OpenID of the called user). In response to the Internet of Things server receiving the first communication request, after parsing the first communication request, the Internet of Things server transmits the second communication request including the object identifier to the communication server based on parameters such as the object identifier in the first communication request. Herein, for a specific implementation of the first communication request, refer to the description in operation 301. Details are not described herein again.

Operation 402: The instant messaging server returns the second communication parameter to the network communication service of the Internet of Things server, the second communication parameter including at least a virtual communication space identifier.

In some embodiments, the instant messaging server receives the second communication request, and performs data verification on request data included in the second communication request, and in response to successful data verification, the instant messaging server returns the second communication parameter to the network communication service of the Internet of Things server, the second communication parameter including at least the virtual communication space identifier (RoomID). Herein, for a specific implementation, refer to the descriptions in operation 303 and operation 304. Details are not described herein again.

Operation 403: The instant messaging server transmits the first communication parameter to the instant messaging client, the first communication parameter including the virtual communication space identifier.

In some embodiments, in response to the Internet of Things server returning a message to the instant messaging server indicating that the second communication parameter is successfully received, the instant messaging server transmits the first communication parameter to a terminal device (on which the instant messaging client is installed), the first communication parameter including the virtual communication space identifier, so that the terminal device invokes the mini program in the instant messaging client to access the virtual communication space. Herein, for a specific implementation, refer to the description in operation 305.

Operation 404: The Internet of Things server invokes a software development kit, and joins a room through the virtual communication space identifier.

In some embodiments, the Internet of Things server invokes a room access interface of the software development kit, and accesses a virtual communication space corresponding to the virtual communication space identifier through the RoomID obtained in operation 402. Herein, for a specific implementation, refer to the description in operation 306. Details are not described herein again.

For example, the room access interface of the VoIP SDK is configured to join a call initiated by the VoIP SDK. The VoIP SDK is in a single-instance mode, and cannot create two or more instances simultaneously in a single process. The VoIP SDK needs to be invoked in a multi-process mode. Inter-process communication (IPC) needs to be implemented by the Internet of Things server. In other words, to use the VoIP SDK in a multi-process environment, an inter-process communication mechanism needs to be implemented. This is because The singleton restriction of the SDK requires that a plurality of instances cannot be created in the same process, while each process needs to access a service of the SDK in the multi-process mode. Implementing the IPC mechanism enables effective transmission of data and status information between different processes.

For example, a procedure for joining a VoIP call may include: first, the VoIP SDK invokes a call method to initiate the call; next, a network call server (for example, a VoIP backend of the instant messaging client) requests the Internet of Things server to notify the Internet of Things server of the initiation of a new VoIP session; and finally, the Internet of Things server invokes a VoIP_join method of the VoIP SDK to join the VoIP session. The Internet of Things server transmits audio/video streams to the VoIP SDK through an audio_module and a camera_module, and the VoIP SDK transmits the received audio/video streams to the network call server, and then transmits the received audio/video streams to the instant messaging client of the user.

For example, parameters for invoking the room access interface of the VoIP SDK may include: a session status callback function (param listener), callback user data (param user_data), an AppId of the mini program (param ***_appID), an SN of the Internet of Things device (param device_ID), a Model ID (param model_ID), a value carried when the network call server notifies the Internet of Things server of the initiation of the VoIP session (param server_token), a payload of the Internet of Things device (param payload), an output parameter for a VoIP session result (param session_out VoIP), and the like.

Operation 405: The instant messaging client joins the room through the virtual communication space identifier.

In some embodiments, the terminal device (on which the instant messaging client is installed) invokes the mini program in the instant messaging client to transmit the access request to the network call server. The request may include the virtual communication space identifier. After receiving the access request transmitted by the terminal device, the network call server may check a registration status of the user of the mini program, and access the terminal device (running the mini program) to the corresponding virtual communication space (the room) after confirming that the user is online.

For example, after the instant messaging client receives a notification (prompt information), the user may click the notification to join the room. For example, when the user opens the mini program in the instant messaging client, the instant messaging client reads resources of the mini program, to invoke the mini program to join the room.

Operation 406: The Internet of Things device exchanges network communication data with a transcoding service of the Internet of Things server.

Operation 407: The transcoding service of the Internet of Things server exchanges the network communication data with the software development kit.

In some embodiments, the Internet of Things server exchanges the network communication data (for example, multimedia data streams) with the Internet of Things device through the software development kit and the transcoding service. The transcoding service may be configured for converting a coding format of the network communication data.

For example, the VoIP SDK runs on the Internet of Things server, and pushes and pulls audio and video by using existing audio and video channels between the Internet of Things server and the Internet of Things device. A data stream path during network communication may include:
device uplink: the Internet of Things device collects audio/video→audio/video streams are transmitted to the Internet of Things server by using an existing channel between the Internet of Things server and the Internet of Things device→the audio/video streams are transmitted to a transmission interface of the VoIP SDK in the Internet of Things server→the VoIP SDK transmits, by using a proprietary protocol, the audio/video streams to a terminal device running the mini program (for example, a mobile phone on which an instant messaging client is installed)→the terminal device performs audio playback and video decoding for rendering (for example, displaying a video on the interface of the mini program); and
device downlink: the terminal device configured to run the mini program performs audio/video collection→a receiving interface of the VoIP SDK in the Internet of Things server receives the audio/video streams→the existing channel between the Internet of Things server and the Internet of Things device is used to transmit the audio/video streams to the Internet of Things device→the Internet of Things device performs audio playback and video decoding for display.

For example, for the audio stream, data can be received from and transmitted to the instant messaging client the instant messaging client every 20 ms by using GetAudioData and SendAudioData in the VoIP SDK. For the video stream (H264/H265), when one or more complete frames of network abstraction layer units (NALUs) are available, the VoIP SDK performs processing such as assembly and decoding on the NALUs, to obtain the video stream transmitted by the mini program. The VoIP SDK may transmit the video stream of the Internet of Things device to the mini program by using the SendVideoData.

The following continues to describe an exemplary structure in which the network communication apparatus 233 provided in the embodiments of this application is implemented as software modules. In some embodiments, as shown in FIG. 2A, the software modules in the network communication apparatus 233 stored in the memory 230 may include:
a data receiving module 2331, configured to receive a first communication request of an Internet of Things device, the first communication request including an object identifier;
a data transmission module 2331, configured to transmit a second communication request comprising the object identifier to a communication server, the second communication request being configured for triggering a pre-authorized mini program in an instant messaging client to access a virtual communication space, and the instant messaging client being associated with the object identifier; and
a network communication module 2333, configured to request the communication server to connect the Internet of Things device to the virtual communication space, the virtual communication space being configured for the communication server to exchange network communication data between the Internet of Things device and the mini program.

In some embodiments, the network communication module 2333 is further configured to: receive a second communication parameter transmitted by the communication server, the second communication parameter including a virtual communication space identifier; and transmit an access request to the communication server, the access request including a network address of the Internet of Things server, and the access request being configured for triggering the communication server to bind a network address of the Internet of Things device to the virtual communication space identifier.

In some embodiments, the network communication module 2333 is further configured to: receive network communication data collected by the Internet of Things device, query a network address of the mini program bound to the virtual communication space identifier, and transmit, based on the network address of the mini program through a software development kit, the network communication data collected by the Internet of Things device to the mini program; and receive, through the software development kit, the network communication data collected by the mini program, query a network address of the Internet of Things device bound to the virtual communication space identifier, and transmit, based on the network address of the Internet of Things device, the network communication data collected by the mini program to the Internet of Things device.

The following continues to describe an exemplary structure in which the network communication apparatus 333 provided in the embodiments of this application is implemented as software modules. In some embodiments, as shown in FIG. 2B, the software modules in the network communication apparatus 333 stored in the memory 330 may include:
a data processing module 3331, configured to receive a second communication request that is transmitted by an Internet of Things server and that includes an object identifier, the second communication request being transmitted after the Internet of Things server receives a first communication request transmitted by an Internet of Things device, and the first communication request including the object identifier; and
a network communication module 3332, configured to connect the Internet of Things device to a virtual communication space.

In some embodiments, the network communication module 3332 is further configured to connect a pre-authorized mini program in an instant messaging client to the virtual communication space, the instant messaging client being associated with the object identifier.

In some embodiments, the network communication module 3332 is further configured to exchange network communication data between the Internet of Things device and the mini program through the virtual communication space.

In some embodiments, the network communication module 3332 is further configured to transmit a first communication parameter to the instant messaging client associated with the object identifier, the first communication parameter including a virtual communication space identifier configured for the pre-authorized mini program in the instant messaging client to access the virtual communication space.

In some embodiments, the data processing module 3331 is further configured to: perform data verification on the request data; and transmit a second communication parameter to the Internet of Things server in response to successful data verification, the second communication parameter including a virtual communication space identifier configured for the Internet of Things server to connect the Internet of Things device to a virtual communication space corresponding to the virtual communication space identifier.

In some embodiments, the data processing module 3331 is further configured to perform at least one of a parameter check, a permission check, and risk control management, the parameter check being configured for checking data formats of the parameter of the Internet of Things device, the object identifier, and the parameter of the mini program, the permission check being configured for determining network communication permissions of the mini program based on the object identifier, and the risk control management being configured for performing anomaly detection based on the request data.

In some embodiments, the data processing module 3331 is further configured to: compare the identity credential parameter of the mini program with a pre-authorized identity credential parameter; obtain a validity period of the identity credential parameter of the mini program in response to a successful comparison; and determine, in response to the validity period not reaching an end date, that the mini program has permission to perform network communication with the Internet of Things device, and proceed to the processing of transmitting a second communication parameter to the Internet of Things server.

In some embodiments, the data processing module 3331 is further configured to: receive an identity parameter of the mini program, and use the identity parameter as a pre-authorized identity parameter, the identity parameter being synchronized to the communication server when the mini program receives an operation of authorizing the mini program to perform network communication.

In some embodiments, the network communication module 3332 is further configured to: receive an access request transmitted by the Internet of Things server, the access request comprising a network address of the Internet of Things server; and bind a network address of the Internet of Things device to the virtual communication space identifier.

The following continues to describe an exemplary structure in which the network communication apparatus 433 provided in the embodiments of this application is implemented as software modules. In some embodiments, as shown in FIG. 2C, the software modules in the network communication apparatus 433 stored in the memory 430 may include:
an information prompt module 4331, configured to display prompt information in a pre-authorized mini program of the instant messaging client; and
a network communication module 4332, configured to invoke the pre-authorized mini program to access a virtual communication space in response to a trigger operation for the prompt information.

An embodiment of this application provides a computer program product. The computer program product includes a computer program or computer-executable instructions, and the computer program or the computer-executable instructions are stored in a computer-readable storage medium. A processor of an electronic device reads the computer executable instructions from the computer-readable storage medium, and the processor executes the computer-executable instructions, so that the electronic device executes the foregoing network communication method in the embodiments of this application.

An embodiment of this application provides a computer-readable storage medium storing computer-executable instructions or a computer program. The computer-executable instructions or the computer program, when executed by a processor, cause the processor to perform the network method provided in the embodiments of this application, for example, the network communication method shown in FIG. 3A.

In some embodiments, the computer-readable storage medium may be a memory such as a RAM, a ROM, a flash memory, a magnetic surface memory, an optical disc, or a CD-ROM, or may be various devices including one or any combination of the memories.

In some embodiments, the computer-executable instructions may be written in any form of programming language (including a compiled or interpreted language, or a declarative or procedural language) in a form of a program, software, a software module, a script, or code, and may be deployed in any form, including being deployed as an independent program or being deployed as a module, a component, a subroutine, or another unit applicable for use in a computing environment.

For example, the computer-executable instructions may, but do not necessarily correspond to a file in a file system, and may be stored as a part of a file that saves another program or data, for example, stored in one or more scripts in a hyper text markup language (HTML) file, stored in a single file dedicated to a program in discussion, or stored in a plurality of collaborative files (for example, files that store one or more modules, subprograms, or code parts).

For example, the computer-executable instructions may be deployed to be executed on one electronic device, or executed on a plurality of electronic devices located at one position, or executed on a plurality of electronic devices that are distributed in a plurality of positions and inter accessed by a communication network.

In conclusion, through the embodiments of this application, Network communication between an Internet of Things device and a mini program in an instant messaging client based on a virtual communication space is established through an Internet of Things server and a communication server. By utilizing compatibility of various operating systems for the instant messaging client, communication between the Internet of Things device and terminals running various operating systems can be implemented. Therefore, it is unnecessary to develop dedicated network communication applications for various Internet of Things devices. By using the instant messaging client and the mini program, operation difficulty for users is reduced and operations become more convenient, thereby reducing development costs. By connecting the Internet of Things device to the virtual communication space through the Internet of Things server, related processing of the network communication is decoupled from the Internet of Things device to the greatest extent, thereby avoiding increased hardware performance requirements of the Internet of Things device and satisfying low power consumption operation requirements of the Internet of Things device.

The foregoing descriptions described above are merely examples of the embodiments of this application, and this is not intended to limit the protection scope of this application. Any modification, equivalent replacement, and improvement made within the spirit and scope of this application shall fall within the protection scope of this application.

## Claims

1. A network communication method, executable by an Internet of Things server, the method comprising:
receiving a first communication request from an Internet of Things, IoT, device, the first communication request comprising an object identifier;
transmitting a second communication request comprising the object identifier to a communication server, the second communication request being for triggering a pre-authorized mini program in an instant messaging client to access a virtual communication space, and the instant messaging client being associated with the object identifier; and
requesting the communication server to connect the IoT device to the virtual communication space, the virtual communication space being configured for the communication server to exchange network communication data between the IoT device and the mini program.

2. The method according to claim 1, wherein the second communication request is configured for triggering the communication server to transmit a first communication parameter to the instant messaging client, the first communication parameter comprising a virtual communication space identifier configured for the pre-authorized mini program in the instant messaging client to access the virtual communication space based on the virtual communication space identifier.

3. The method according to claim 1, wherein the requesting the communication server to connect the IoT device to the virtual communication space comprises:
receiving a second communication parameter transmitted by the communication server, the second communication parameter comprising a virtual communication space identifier; and
transmitting an access request to the communication server, the access request comprising a network address of the IoT server, and the access request being configured for triggering the communication server to bind a network address of the IoT device to the virtual communication space identifier.

4. The method according to any one of claims 1 to 3, wherein the communication server is configured to exchange network communication data between the IoT device and the mini program in the following manners:
receiving network communication data collected by the IoT device, querying a network address of the mini program bound to the virtual communication space identifier, and transmitting, based on the network address of the mini program through a software development kit, the network communication data collected by the IoT device to the mini program; and
receiving, through the software development kit, the network communication data collected by the mini program, querying a network address of the IoT device bound to the virtual communication space identifier, and transmitting, based on the network address of the IoT device, the network communication data collected by the mini program to the IoT device.

5. The method according to any one of claims 1 to 3, wherein the second communication request comprises request data, the request data being configured for the communication server to perform data verification before the second communication parameter is received, and after successful verification, transmit the second communication parameter to the IoT server.

6. The method according to claim 5, wherein the request data comprises a parameter of the IoT device, the object identifier, and a parameter of the mini program; and
the data verification comprises at least one of a parameter check, a permission check, and risk control management, the parameter check being configured for checking data formats of the parameter of the IoT device, the object identifier, and the parameter of the mini program, the permission check being configured for determining network communication permissions of the mini program based on the object identifier, and the risk control management being configured for performing anomaly detection based on the request data.

7. The method according to any one of claims 1 to 6, wherein the second communication request further comprises an identity credential parameter of the mini program, the identity credential parameter of the mini program being configured for the communication server to determine a response to the second communication request when verifying that the mini program has permission to perform network communication with the IoT device, and
a manner in which the communication server verifies that the mini program has permission to perform network communication with the IoT device comprising:
comparing the identity credential parameter of the mini program with a pre-authorized identity credential parameter;
obtaining a validity period of the identity credential parameter of the mini program in response to a successful comparison; and
determining, in response to the validity period not reaching an end date, that the mini program has permission to perform network communication with the IoT device.

8. The method according to claim 7, wherein the pre-authorized identity credential parameter is an identity parameter of the mini program in the instant messaging client, and is synchronized to the communication server when the mini program receives an operation of authorizing the mini program to perform network communication.

9. The method according to any one of claims 1 to 8, wherein the second communication parameter further comprises a network communication credential configured for the communication server to perform network communication authentication on the IoT server, and in response to completion of the network communication authentication, the IoT server connects the IoT device to the corresponding virtual communication space through the virtual communication space identifier.

10. A network communication method, applied to a communication server, the method comprising:
receiving a second communication request that is transmitted by an Internet of Things, IoT, server and that comprises an object identifier, the second communication request being transmitted after the IoT server receives a first communication request transmitted by an IoT device, and the first communication request comprising the object identifier;
connecting the IoT device to a virtual communication space;
connecting a pre-authorized mini program in an instant messaging client to the virtual communication space, the instant messaging client being associated with the object identifier; and
exchanging network communication data between the IoT device and the mini program through the virtual communication space.

11. The method according to claim 10, wherein the connecting a pre-authorized mini program in an instant messaging client to the virtual communication space comprises:
transmitting a first communication parameter to the instant messaging client associated with the object identifier, the first communication parameter comprising a virtual communication space identifier configured for the pre-authorized mini program in the instant messaging client to access the virtual communication space.

12. The method according to claim 10 or 11, wherein the second communication request comprises request data, and after the receiving a second communication request that is transmitted by an IoT server and that comprises an object identifier, the method further comprises:
performing data verification on the request data; and
transmitting a second communication parameter to the IoT server in response to successful data verification, the second communication parameter comprising a virtual communication space identifier configured for the IoT server to connect the IoT device to a virtual communication space corresponding to the virtual communication space identifier.

13. The method according to claim 12, wherein the request data comprises a parameter of the IoT device, the object identifier, and a parameter of the mini program; and
the performing data verification on the request data comprises:
performing at least one of a parameter check, a permission check, and risk control management, the parameter check being configured for checking data formats of the parameter of the IoT device, the object identifier, and the parameter of the mini program, the permission check being configured for determining network communication permissions of the mini program based on the object identifier, and the risk control management being configured for performing anomaly detection based on the request data.

14. The method according to claim 12 or 13, wherein the second communication request comprises an identity credential parameter of the mini program, and before the transmitting a second communication parameter to the IoT server, the method further comprises:
comparing the identity credential parameter of the mini program with a pre-authorized identity credential parameter;
obtaining a validity period of the identity credential parameter of the mini program in response to a successful comparison; and
determining, in response to the validity period not reaching an end date, that the mini program has permission to perform network communication with the IoT device, and proceeding to the processing of transmitting a second communication parameter to the IoT server.

15. The method according to claim 14, wherein before the comparing the identity credential parameter of the mini program with a pre-authorized identity credential parameter, the method further comprises:
receiving an identity parameter of the mini program, and using the identity parameter as a pre-authorized identity parameter, the identity parameter being synchronized to the communication server when the mini program receives an operation of authorizing the mini program to perform network communication.

16. The method according to any one of claims 10 to 15, wherein the connecting the IoT device to the virtual communication space comprises:
receiving an access request transmitted by the IoT server, the access request comprising a network address of the IoT server; and
binding a network address of the IoT device to the virtual communication space identifier.

17. A network communication method, applied to the instant messaging client according to any one of claims 1 to 16, the method comprising:
displaying prompt information in a pre-authorized mini program of the instant messaging client; and
invoking the pre-authorized mini program to access a virtual communication space in response to a trigger operation for the prompt information.

18. A network communication apparatus, applied to an Internet of Things, IoT, server, the apparatus comprising:
a data receiving module, configured to receive a first communication request of an IoT device, the first communication request comprising an object identifier;
a data transmission module, configured to transmit a second communication request comprising the object identifier to a communication server, the second communication request being configured for triggering a pre-authorized mini program in an instant messaging client to access a virtual communication space, and the instant messaging client being associated with the object identifier; and
a network communication module, configured to request the communication server to connect the IoT device to the virtual communication space, the virtual communication space being configured for the communication server to exchange network communication data between the IoT device and the mini program.

19. A network communication apparatus, applied to a communication server, the apparatus comprising:
a data processing module, configured to receive a second communication request that is transmitted by an Internet of Things, IoT, server and that comprises an object identifier, the second communication request being transmitted after the IoT server receives a first communication request transmitted by an IoT device, and the first communication request comprising the object identifier; and
a network communication module, configured to connect the IoT device to a virtual communication space,
the network communication module being further configured to connect a pre-authorized mini program in an instant messaging client to the virtual communication space, the instant messaging client being associated with the object identifier; and
the network communication module being further configured to exchange network communication data between the IoT device and the mini program through the virtual communication space.

20. A network communication apparatus, applied to the instant messaging client according to any one of claims 1 to 16, the apparatus comprising:
an information prompt module, configured to display prompt information in a pre-authorized mini program of the instant messaging client; and
a network communication module, configured to invoke the pre-authorized mini program to access a virtual communication space in response to a trigger operation for the prompt information.

21. An Internet of Things, IoT, server, comprising:
a memory, configured to store computer-executable instructions or a computer program; and
a processor, configured to implement the network communication method according to any one of claims 1 to 9 when executing the computer-executable instructions or the computer program stored in the memory.

22. A communication server, comprising:
a memory, configured to store computer-executable instructions or a computer program; and
a processor, configured to implement the network communication method according to any one of claims 10 to 16 when executing the computer-executable instructions or the computer program stored in the memory.

23. A terminal device, on which an instant messaging client is installed, the terminal device comprising:
a memory, configured to store computer-executable instructions or a computer program; and
a processor, configured to implement the network communication method according to claim 17 when executing the computer-executable instructions or the computer program stored in the memory.

24. A computer-readable storage medium, having computer-executable instructions or a computer program stored therein, the computer-executable instructions or the computer program, when executed by a processor, implementing the network communication method according to any one of claims 1 to 9, implementing the network communication method according to any one of claims 10 to 16, or implementing the network communication method according to claim 17.

25. A computer program product, comprising computer-executable instructions or a computer program, the computer-executable instructions or the computer program, when executed by a processor, implementing the network communication method according to any one of claims 1 to 9, implementing the network communication method according to any one of claims 10 to 16, or implementing the network communication method according to claim 17.
